# FASCICULE DE BREVET EUROPEEN

(11) **EP 1 697 202 B1**
(45) Date de publication et mention de la délivrance du brevet: **23.02.2011**
(21) Numéro de dépôt: 04816564.1
(22) Date de dépôt: 16.12.2004
(51) Int. Cl.: B62D 21/11

(54) **AGENCEMENT POUR LA FIXATION D'UN BERCEAU MOTEUR SUR UN LONGERON TUBULAIRE**
SYSTEM ZUR BEFESTIGUNG EINES MOTORTRÄGERS AN EINEM RÖHRENFÖRMIGEN SEITENGLIED
SYSTEM FOR FIXING AN ENGINE CRADLE TO A TUBULAR SIDE-MEMBER

(30) Priorité: 19.12.2003 FR 0315055
(43) Date de publication de la demande: 06.09.2006
(73) Titulaire: RENAULT S.A.S., 92100 Boulogne Billancourt (FR)
(72) Inventeur: FAUCONNIER, Alain, F-91400 Saclay (FR)
(74) Mandataire: Religieux, Vincent
(86) Numéro de dépôt international: PCT/FR2004/050711
(87) Numéro de publication internationale: WO 2005/061307

(56) Documents cités:
- EP-A- 0 891 918
- EP-A- 0 927 680
- US-A- 2 327 585
- US-B1- 6 296 418

## Description

L'invention concerne un agencement pour la fixation d'un berceau moteur sensiblement transversal sur un longeron tubulaire sensiblement longitudinal d'un véhicule automobile.

L'invention concerne plus particulièrement un agencement pour la fixation d'un berceau moteur sensiblement transversal sur un longeron tubulaire sensiblement longitudinal d'un véhicule automobile, du type qui comporte un élément de fixation intermédiaire sensiblement vertical qui est fixé au longeron et sur lequel est fixé le berceau.

On connaît de nombreux exemples d'agencements de ce type.

Le document FR-A1-2.765.154 décrit et représente un agencement du type décrit précédemment dans lequel l'élément intermédiaire est constitué d'une biellette qui est d'une part reliée à la traverse et qui est d'autre part traversée par une vis vissée dans une douille transversale traversant le longeron. Un tel élément intermédiaire présente l'inconvénient de permettre au berceau d'exercer un bras de levier important sur le longeron, ce qui augmente ses risques de rupture.

Le document US-A-2.171.947 décrit et représente un agencement dans lequel l'élément intermédiaire est constitué d'un support qui est d'une part relié à la traverse par l'intermédiaire d'éléments d'accouplement élastique et qui est d'autre part traversé par une vis au travers du longeron. Un tel élément intermédiaire présente l'inconvénient, du fait de la présence du support, de permettre au berceau d'exercer un bras de levier important sur le longeron, ce qui augmente d'autant plus ses risques de rupture que tout le poids du berceau est reporté sur la vis.

On connaît du document US-A-6.296.418, un agencement pour la fixation d'un berceau moteur sensiblement transversal sur un longeron tubulaire sensiblement longitudinal d'un véhicule automobile, du type qui comporte un élément de fixation intermédiaire sensiblement vertical qui est fixé au longeron et sur lequel est fixé le berceau, l'élément intermédiaire comportant une douille tubulaire d'orientation verticale qui est soudée au longeron et qui est destinée à recevoir directement une vis traversant un perçage du berceau.

Plus généralement, pour améliorer la fixation d'un berceau à deux longerons parallèles d'un véhicule sans réduire la résistance de ces derniers, il importe de réduire au maximum la distance entre le berceau et le longeron, ceci afin d'une part, de réduire le bras de levier exercé par le berceau sur les longerons et d'autre part, de limiter les efforts d'écartement exercés par ledit berceau sur les longerons.

Dans ce but, l'invention propose un agencement du type décrit précédemment, caractérisé en ce que le longeron est de section polygonale et en ce que la douille traverse au moins un perçage d'une paroi horizontale du longeron (12), est soudée au longeron, et s'étend à l'intérieur du longeron.

Selon d'autres caractéristiques de l'invention :
- la douille traverse un perçage d'une paroi horizontale inférieure du longeron et elle est soudée sur une face interne de la paroi horizontale inférieure,
- la douille traverse un perçage d'une paroi horizontale inférieure du longeron, un perçage d'une paroi horizontale supérieure du longeron, et elle est soudée de chaque côté du longeron sur une face externe de la paroi horizontale inférieure et sur une face externe de la paroi horizontale supérieure.
- l'agencement comporte une équerre de renfort d'orientation sensiblement longitudinale, dont une branche est soudée sur une face interne de la paroi horizontale inférieure du longeron et est traversée par la douille, et dont l'autre branche est soudée sur une face interne d'une paroi sensiblement verticale du longeron, pour renforcer la résistance du longeron aux efforts de cisaillement,
- le longeron est constitué de deux profilés en U qui sont tournés horizontalement l'un vers l'autre et qui sont soudés l'un à l'autre par l'intermédiaire de feuillures en regard, et la douille traverse les deux branches opposées de l'un des profilés,

- l'agencement comporte un pontet d'orientation sensiblement verticale qui est soudé sur la douille et qui est soudé entre la face interne de la paroi horizontale inférieure et la face interne de la paroi horizontale supérieure, pour assurer la tenue de la douille dans le longeron,
- le pontet comporte à chacune de ses extrémités deux pattes d'orientation sensiblement horizontales qui sont soudées sur la face interne de la paroi horizontale correspondante du longeron,
- les pattes horizontales inférieures du pontet sont soudées à leurs extrémités de part et d'autre de l'équerre du longeron,
- l'agencement comporte un pontet d'orientation sensiblement verticale en forme de plaque qui est soudé sur la douille et qui est interposé et soudé entre les feuillures des profilés en U du longeron,
- au moins une face d'appui du berceau s'étend au contact d'une face externe de la paroi inférieure du longeron.
- la douille est soudée sur une face latérale verticale du longeron.

D'autres caractéristiques et avantages de l'invention apparaîtront à la lecture de la description détaillée qui suit pour la compréhension de laquelle on se reportera aux dessins annexés dans lesquels :
- la figure 1 est une vue d'un agencement selon un état antérieur de la technique,
- la figure 2 est une vue en perspective avec arrachement d'un premier mode de réalisation d'un agencement selon l'invention,
- la figure 3 est une vue en coupe de l'agencement de la figure 2,
- la figure 4 est une vue en perspective d'un deuxième mode de réalisation d'un agencement selon l'invention,
- la figure 5 est une vue en coupe d'un troisième mode de réalisation d'un agencement selon l'invention.

Dans la description qui va suivre, des chiffres de référence identiques désignent des pièces identiques ou ayant des fonctions similaires.

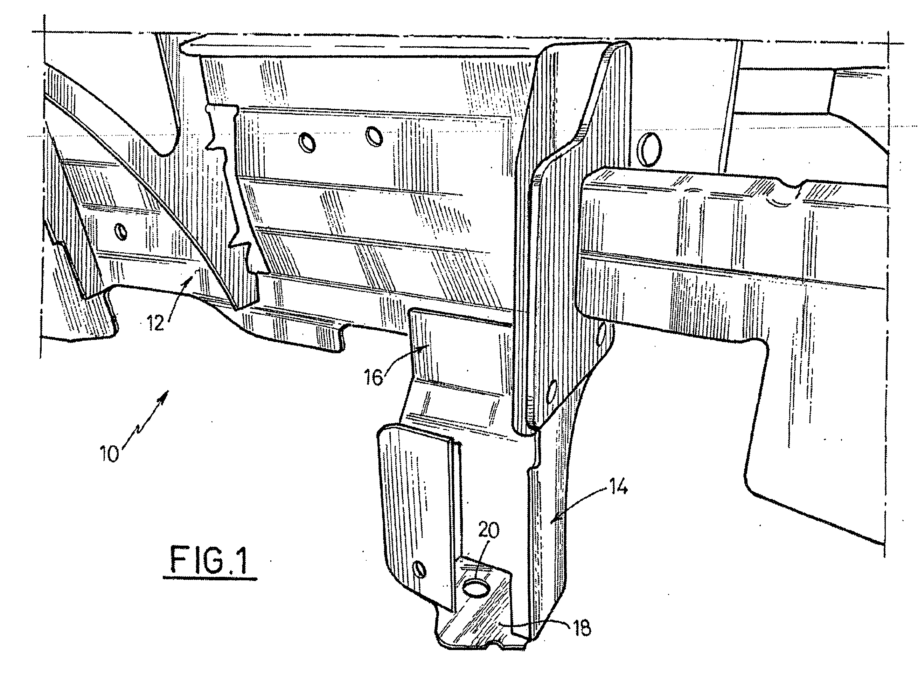

On a représenté à la figure 1 un agencement 10 conventionnel pour la fixation d'un berceau moteur (non représenté) sensiblement transversal sur un longeron 12 tubulaire sensiblement longitudinal d'un véhicule automobile.

De manière connue, l'agencement 10 comporte un élément 14 de fixation intermédiaire sensiblement vertical, notamment une pendeloque 14 dont des ailes 16 sont soudées de part et d'autre du longeron 12 et sur laquelle est fixé le berceau, par exemple par l'intermédiaire d'une patte de fixation 18 qui est traversée par un perçage 20 destiné à recevoir une vis de fixation du berceau.

Cette conception présente l'inconvénient, du fait de la distance élevée entre le perçage 18 de fixation du berceau et les ailes 16, de permettre au berceau d'exercer un bras de levier important sur le longeron 12. Ce bras de levier risque de provoquer l'apparition d'une concentration élevée d'efforts importants entre les ailes 16 et le longeron 12, et d'autre part de provoquer la déformation transversale et l'écartement des longerons 12.

Pour remédier à cet inconvénient, l'invention propose un agencement 10 du type décrit précédemment, comportant une fixation du berceau au plus près du longeron 12.

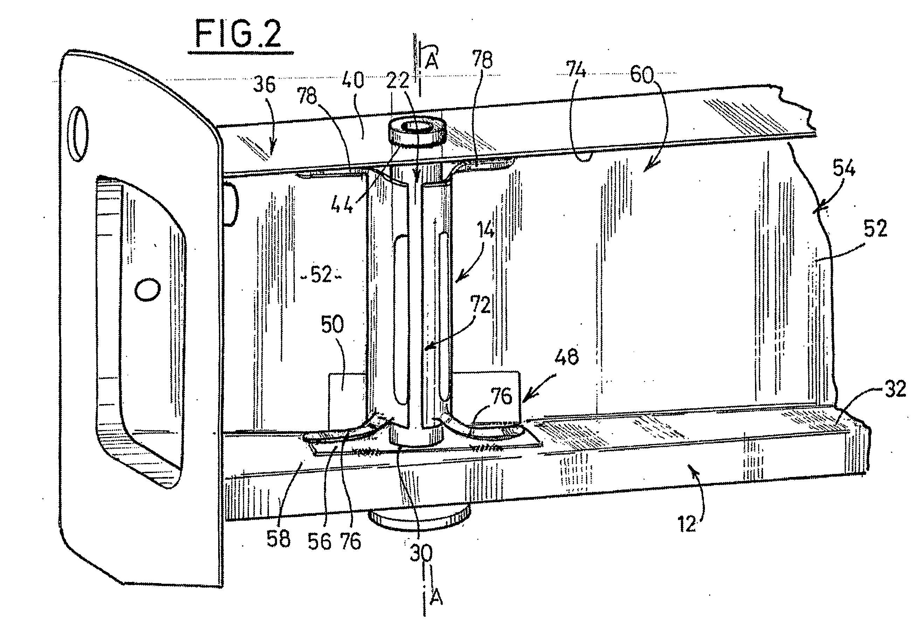

Dans ce but, comme l'illustrent les figures 2 et suivantes, l'invention propose une nouvelle conception d'un agencement 10 selon laquelle l'élément intermédiaire 14 comporte une douille 22 tubulaire d'orientation verticale d'axe "A" qui est soudée au longeron 12 et qui est destiné à recevoir une vis 24 d'axe "A" traversant un perçage 26 du berceau 28.

Cette configuration est adaptable à tout type de longeron connu de l'état de la technique, y compris des longerons tubulaires cylindriques.

Toutefois, dans le mode de réalisation préféré de l'invention, le longeron 12 est de section polygonale. Dans l'exemple qui a été représenté aux figures 2 et suivantes, le longeron 12 est notamment d'une section en forme de quadrilatère sensiblement trapézoïdal.

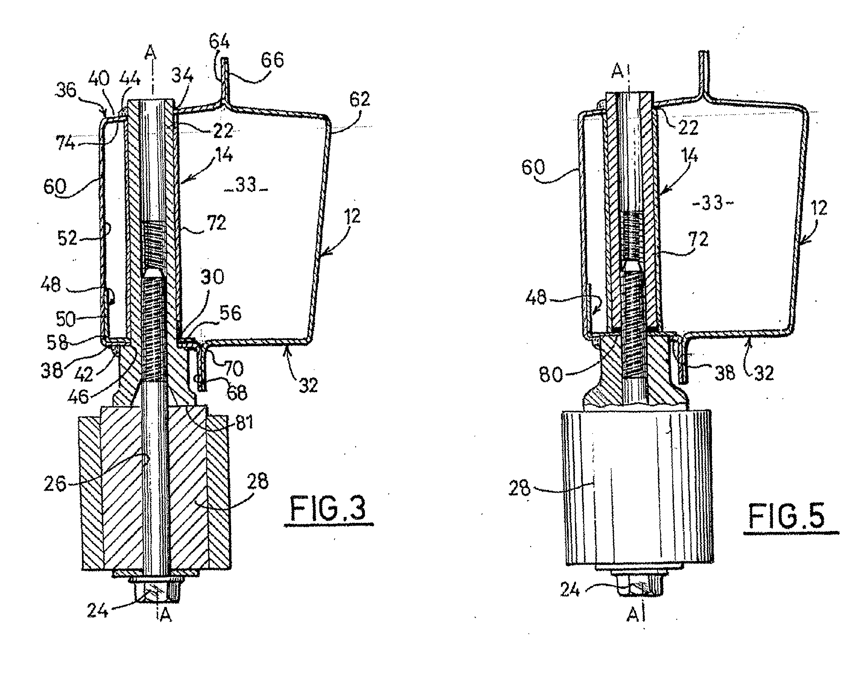

Comme l'illustre plus particulièrement la figure 3, la douille 22 traverse au moins un perçage 30 d'une paroi horizontale 32 du longeron, est soudée au longeron 12, et s'étend dans une partie intérieure 33 du longeron 12.

Plus particulièrement, dans le mode de réalisation préféré de l'invention, la douille 22 traverse un perçage 30 d'une paroi 32 horizontale inférieure du longeron 12, un perçage 34 d'une paroi 36 horizontale supérieure du longeron 12, et elle est soudée de chaque côté du longeron 12 sur une face externe 38 de la paroi 32 horizontale inférieure et sur une face externe 40 de la paroi 36 horizontale supérieure par l'intermédiaire de cordons de soudure respectifs 42 et 44.

En variante, la douille 22 pourrait ne traverser que le perçage 30 de la paroi 32 horizontale inférieure du longeron et n'être soudée que sur une face interne de la paroi horizontale 32 inférieure, ceci afin que, en tout état de cause, le cordon de soudure qui assure la reprise des efforts de traction de la douille 22 sur le longeron soit agencé du côté d'une paroi opposé à celui du berceau moteur 28.

Avantageusement, la douille 22 est, lors de son montage, enfilée dans le longeron 12 par son perçage inférieur 30 et à cet effet, la douille 22 comporte une portée d'épaulement 46 qui est destinée à entrer en contact avec la paroi horizontale 32 inférieure, pour immobiliser la douille 22 dans le longeron 12 avant son soudage. Cette configuration n'est toutefois pas limitative de l'invention et la douille peut ne pas comporter de portée d'épaulement et être seulement montée serrée dans le perçage 30, pour permettre l'appui du berceau sous le longeron, comme on le verra en référence à la figure 5.

Avantageusement, comme l'illustre la figure 2, l'agencement 10 comporte une équerre 48 de renfort d'orientation sensiblement longitudinale, dont une branche 56 est soudée sur une face interne 58 de la paroi 32 horizontale inférieure du longeron et est traversée par la douille 22, et dont l'autre branche 50 est soudée sur une face interne 52 d'une paroi 54 sensiblement verticale du longeron 12, pour renforcer la résistance du longeron 12 aux efforts de cisaillement.

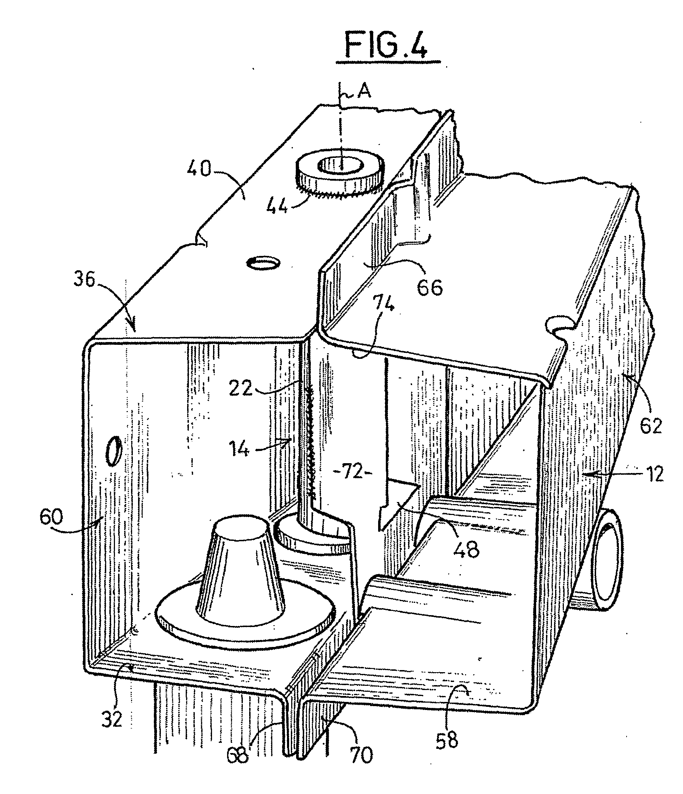

Dans le mode de réalisation préféré de l'invention, comme représenté aux figures 3 et 4, le longeron 12 est constitué de deux profilés 60, 62 en U qui sont tournés horizontalement l'un vers l'autre et qui sont soudés l'un à l'autre par l'intermédiaire de feuillures 64, 66 supérieures et de feuillures 68, 70 inférieures en regard. La douille 22 traverse les deux branches opposées de l'un des profilés, notamment le profilé 60.

Dans cette configuration, l'agencement 10 comporte aussi un pontet 72 d'orientation sensiblement verticale qui est soudé sur la douille 22 et qui est soudé entre la face interne 58 de la paroi 32 horizontale inférieure et la face interne 74 de la paroi 36 horizontale supérieure, pour assurer la tenue de la douille 22 dans le longeron 12.

Dans le mode de réalisation préféré de l'invention, le pontet 72 comporte à chacune de ses extrémités deux pattes inférieures 76 et supérieures 78 d'orientation sensiblement horizontale qui sont soudées sur la face interne 58, 74 de la paroi horizontale 32, 36 correspondante du longeron 12.

Pour permettre le soudage des pattes 76 inférieures compte tenu de la présence de l'équerre 48, les pattes 76 horizontales inférieures du pontet 72 sont soudées à leurs extrémités de part et d'autre de l'équerre 48 du longeron 12.

En variante, comme l'illustre la figure 4, le pontet 72 d'orientation sensiblement verticale peut être conformé en forme de plaque, être soudé sur la douille 22, et être interposé et soudé entre les feuillures 68, 70 d'une part et 64, 66 d'autre part des profilés 60, 62 en U du longeron 12.

Dans tous ces modes de réalisation de l'invention, comme représenté plus particulièrement à la figure 5, au moins une face d'appui 80 du berceau 28 peut s'étendre au contact de la face externe 38 de la paroi inférieure 32 du longeron 12.

La face d'appui 80 du berceau peut être décalée axialement par rapport à la douille 22 comme c'est le cas en ce qui concerne la figure 3 dans laquelle le berceau comporte aussi une face 81 en appui sur la douille 22 ou bien, comme l'illustre la figure 5, la face d'appui 80 peut être agencée dans le même plan que la douille 22, celle-ci étant alors plus courte

Cette configuration permet d'assurer une diffusion des efforts de compression que le berceau 28 pourrait exercer sur le longeron 12.

Il sera compris que les modes de réalisation qui ont été décrits en référence aux figures 2 à 5 ne sont pas limitatifs de l'invention. Ainsi, par exemple, la douille 22 pourrait notamment être soudée sur une face latérale verticale du longeron 12.

L'invention propose donc un agencement pour la fixation d'un berceau moteur 28 sur un longeron 12 du véhicule, qui présente l'avantage de ne pas affaiblir pas la résistance dudit longeron 12 et qui est de surcroît particulièrement compact.

## Revendications

1. Agencement (10) pour la fixation d'un berceau (28) moteur sensiblement transversal sur un longeron (12) tubulaire sensiblement longitudinal d'un véhicule automobile, du type qui comporte un élément (14) de fixation intermédiaire sensiblement vertical qui est fixé au longeron (12) et sur lequel est fixé le berceau (28), l'élément intermédiaire (14) comportant une douille (22) tubulaire d'orientation verticale qui est soudée au longeron (12) et qui est destinée à recevoir directement une vis (24) traversant un perçage (26) du berceau (28),
**caractérisé en ce que** le longeron (12) est de section polygonale et **en ce que** la douille (22) traverse au moins un perçage d'une paroi horizontale du longeron (12), est soudée au longeron (12), et s'étend à l'intérieur du longeron (12).

2. Agencement (10) selon la revendication précédente, **caractérisé en ce que** la douille (22) traverse un perçage (30) d'une paroi horizontale inférieure (32) du longeron (12) et **en ce qu'**elle est soudée sur une face interne de la paroi (32) horizontale inférieure.

3. Agencement (10) selon la revendication 1, **caractérisé en ce que** la douille (22) traverse un perçage (30) d'une paroi (32) horizontale inférieure du longeron (12), un perçage (34) d'une paroi (36) horizontale supérieure du longeron (12), et **en ce qu'**elle est soudée de chaque côté du longeron sur une face externe (38) de la paroi (32) horizontale inférieure et sur une face externe (40) de la paroi (36) horizontale supérieure.

4. Agencement (10) selon l'une des revendications 2 ou 3, **caractérisé en ce qu'**il comporte une équerre (48) de renfort d'orientation sensiblement longitudinale, dont une branche (56) est soudée sur une face interne (58) de la paroi horizontale (32) inférieure du longeron et est traversée par la douille (22), et dont l'autre branche (50) est soudée sur une face interne (52) d'une paroi (54)sensiblement verticale du longeron (12), pour renforcer la résistance du longeron (12) aux efforts de cisaillement.

5. Agencement (10) selon l'une quelconque des revendications précédentes, **caractérisé en ce que** le longeron est constitué de deux profilés (60, 62) en U qui sont tournés horizontalement l'un vers l'autre et qui sont soudés l'un à l'autre par l'intermédiaire de feuillures (64, 66) en regard et **en ce que** la douille (22) traverse les deux branches opposées de l'un des profilés (60).

6. Agencement (10) selon l'une des revendications 3 à 5, **caractérisé en ce qu'**il comporte un pontet (72) d'orientation sensiblement verticale qui est soudé sur la douille (22) et qui est soudé entre la face interne (58) de la paroi (32) horizontale inférieure et la face interne (74) de la paroi (36) horizontale supérieure, pour assurer la tenue de la douille (22) dans le longeron (12).

7. Agencement (10) selon la revendication précédente, **caractérisé en ce que** le pontet (72) comporte à chacune de ses extrémités deux pattes (76, 78) d'orientation sensiblement horizontale qui sont soudées sur la face interne (8, 74) de la paroi horizontale (32, 36) correspondante du longeron (12).

8. Agencement (10) selon la revendication précédente, **caractérisé en ce que** les pattes (76) horizontales inférieures du pontet sont soudées à leurs extrémités de part et d'autre de l'équerre (48) du longeron (12).

9. Agencement (10) selon la revendication 5, **caractérisé en ce qu'**il comporte un pontet (78) d'orientation sensiblement verticale en forme de plaque qui est soudé sur la douille (22) et qui est interposé et soudé entre les feuillures (68, 70) des profilés (60, 62) en U du longeron (12).

10. Agencement (10) selon l'une quelconque des revendications 2 à 9, **caractérisé en ce qu'**au moins une face d'appui (80) du berceau (28) s'étend au contact d'une face externe (38) de la paroi inférieure (32) du longeron (12).

11. Agencement selon la revendication 1, **caractérisé en ce que** la douille (22) est soudée sur une face latérale verticale du longeron (12).

## Claims

1. System (10) for fixing a substantially transverse engine cradle (28) to a substantially longitudinal tubular side-member (12) of a motor vehicle, of the type which comprises a substantially vertical intermediate fixing element (14) which is fixed to the side-member (12) and to which the cradle (28) is fixed, the intermediate element (14) comprising a vertically directed tubular sleeve (22) which is welded to the side-member (12) and which is intended directly to accept a screw (24) that passes through a hole (26) in the cradle (28),
**characterized in that** the side-member (12) is of polygonal cross section and **in that** the sleeve (22) passes through at least one hole in a horizontal wall of the side-member (12), is welded to the side-member (12), and extends inside the side-member (12).

2. System (10) according to the preceding claim, **characterized in that** the sleeve (22) passes through a hole (30) in a lower horizontal wall (32) of the side-member (12), and **in that** it is welded to an internal face of the lower horizontal wall (32).

3. System (10) according to Claim 1, **characterized in that** the sleeve (22) passes through a hole (30) in a lower horizontal wall (32) of the side-member (12), a hole (34) in an upper horizontal wall (36) of the side-member (12), and **in that** it is welded, on each side of the side-member, to an external face (38) of the lower horizontal wall (32) and to an external face (40) of the upper horizontal wall (36).

4. System (10) according to one of Claims 2 and 3, **characterized in that** it comprises a strengthening bracket (48) directed substantially longitudinally, one leg (56) of which bracket is welded to an internal face (58) of the lower horizontal wall (32) of the side-member and has the sleeve (22) passing through it and the other leg (50) of which bracket is welded to an internal face (52) of a substantially vertical wall (54) of the side-member (12) to strengthen the side-member (12) against shear forces.

5. System (10) according to any one of the preceding claims, **characterized in that** the side-member consists of two U-sections (60, 62) facing horizontally towards one another and welded together via opposing rebates (64, 66), and **in that** the sleeve (22) passes through the two opposite legs of one of the sections (60).

6. System (10) according to one of Claims 3 to 5, **characterized in that** it comprises a substantially vertical directed bridge (72) which is welded to the sleeve (22) and which is welded between the internal face (58) of the lower horizontal wall (32) and the internal face (74) of the other horizontal wall (36) so as to hold the sleeve (22) in position in the side-member (12).

7. System (10) according to the preceding claim, **characterized in that** the bridge (72) comprises, at each of its ends, two substantially horizontally directed tabs (76, 78) which are welded to the internal face (8, 74) of the corresponding horizontal wall (32, 36) of the side-member (12).

8. System (10) according to the preceding claim, **characterized in that** the lower horizontal tabs (76) of the bridge are welded at their ends on either side of the bracket (48) of the side-member (12).

9. System (10) according to Claim 5, **characterized in that** it comprises a substantially vertically directed bridge (78) in the form of a plate which is welded to the sleeve (22) and which is interposed and welded between the rebates (68, 70) of the U-sections (60, 62) of the side-member (12).

10. System (10) according to any one of Claims 2 to 9, **characterized in that** at least one bearing face (80) of the cradle (28) extends in contact with an external face (38) of the lower wall (32) of the side-member (12).

11. System according to Claim 1, **characterized in that** the sleeve (22) is welded to a vertical lateral face of the side-member (12).

## Patentansprüche

1. Anordnung (10) für die Befestigung eines sich im Wesentlichen quer erstreckenden Motorträgers (28) an einem sich im Wesentlichen längs erstreckenden, röhrenförmigen Längsträger (12) eines Kraftfahrzeugs jener Art, die ein im Wesentlichen vertikales Zwischenbefestigungselement (14) aufweist, das an dem Längsträger (12) befestigt ist und an dem der Träger (28) befestigt ist, wobei das Zwischenelement (14) eine röhrenförmige Hülse (22) mit vertikaler Ausrichtung aufweist, die mit dem Längsträger (12) verschweißt ist und die eine eine Bohrung (26) des Trägers (28) durchquerende Schraube (24) direkt aufnehmen soll, **dadurch gekennzeichnet, dass** der Längsträger (12) einen polygonalen Querschnitt aufweist und die Hülse (22) mindestens eine Bohrung einer horizontalen Wand des Längsträgers (12) durchquert, mit dem Längsträger (12) verschweißt ist und sich im Inneren des Längsträgers (12) erstreckt.

2. Anordnung (10) nach dem vorhergehenden Anspruch, **dadurch gekennzeichnet, dass** die Hülse (22) eine Bohrung (30) einer horizontalen unteren Wand (32) des Längsträgers (12) durchquert und mit einer Innenfläche der horizontalen unteren Wand (32) verschweißt ist.

3. Anordnung (10) nach Anspruch 1, **dadurch gekennzeichnet, dass** die Hülse (22) eine Bohrung (30) einer horizontalen unteren Wand (32) des Längsträgers (12) und eine Bohrung (34) einer horizontalen oberen Wand (36) des Längsträgers (12) durchquert und auf einer Außenseite (38) der horizontalen unteren Wand (32) und auf einer Außenseite (40) der horizontalen oberen Wand (36) mit jeder Seite des Längsträgers verschweißt ist.

4. Anordnung (10) nach Anspruch 2 oder 3, **dadurch gekennzeichnet, dass** sie ein im Wesentlichen längs ausgerichtetes Verstärkungs-Winkelstück (48) aufweist, von dem ein Schenkel (56) mit einer Innenseite (58) der horizontalen unteren Wand (32) des Längsträgers verschweißt ist und von der Hülse (22) durchquert wird und von dem der andere Schenkel (50) mit einer Innenseite (52) einer im Wesentlichen vertikalen Wand (54) des Längsträgers (12) verschweißt ist, um den Widerstand des Längsträgers (12) gegen Scherkräfte zu verstärken.

5. Anordnung (10) nach einem der vorhergehenden Ansprüche, **dadurch gekennzeichnet, dass** der Längsträger aus zwei U-förmigen Profilen (60, 62) besteht, die horizontal zueinander weisen und die mittels gegenüberliegenden Falzungen (64, 66) miteinander verschweißt sind, und die Hülse (22) die beiden gegenüberliegenden Schenkel eines der Profile (60) durchquert.

6. Anordnung (10) nach einem der Ansprüche 3 bis 5, **dadurch gekennzeichnet, dass** sie ein im Wesentlichen vertikal ausgerichtetes Brückenteil (72) aufweist, das mit der Hülse (22) verschweißt ist und zwischen der Innenseite (58) der horizontalen unteren Wand (32) und der Innenseite (74) der horizontalen oberen Wand (36) verschweißt ist, um das Halten der Hülse (22) im Längsträger (12) zu gewährleisten.

7. Anordnung (10) nach dem vorhergehenden Anspruch, **dadurch gekennzeichnet, dass** das Brückenteil (72) an jedem seiner Enden zwei im Wesentlichen horizontal ausgerichtete Ansätze (76, 78) aufweist, die mit der Innenseite (8, 74) der entsprechenden horizontalen Wand (32, 36) des Längsträgers (12) verschweißt sind.

8. Anordnung (10) nach dem vorhergehenden Anspruch, **dadurch gekennzeichnet, dass** die horizontalen unteren Ansätze (76) des Brückenteils an ihren Enden auf beiden Seiten des Winkelstücks (48) des Längsträgers (12) verschweißt sind.

9. Anordnung (10) nach Anspruch 5, **dadurch gekennzeichnet, dass** sie ein im Wesentlichen vertikal ausgerichtetes, plattenförmiges Brückenteil (78) aufweist, das mit der Hülse (22) verschweißt ist und das zwischen den Falzungen (68, 70) der U-förmigen Profile (60, 62) des Längsträgers (12) angeordnet und verschweißt ist.

10. Anordnung (10) nach einem der Ansprüche 2 bis 9, **dadurch gekennzeichnet, dass** sich mindestens eine Stützfläche (80) des Trägers (28) in Kontakt mit einer Außenseite (38) der unteren Wand (32) des Längsträgers (12) erstreckt.

11. Anordnung nach Anspruch 1, **dadurch gekennzeichnet, dass** die Hülse (22) mit einer vertikalen Seitenfläche des Längsträgers (12) verschweißt ist.
